# FASCICULE DE BREVET EUROPEEN

(11) **EP 3 134 286 B1**
(45) Date de publication et mention de la délivrance du brevet: **28.02.2018**
(21) Numéro de dépôt: 15720929.7
(22) Date de dépôt: 24.04.2015
(51) Int. Cl.: B60K 17/24, B60K 5/04, B60K 17/356, B60K 17/10

(54) **ENSEMBLE D'ENTRAÎNEMENT POUR UN ARBRE MOTEUR D'UN VÉHICULE AUTOMOBILE**
ANTRIEBSEINHEIT FÜR EINE MOTORWELLE EINES KRAFTFAHRZEUGS
DRIVE UNIT FOR A MOTOR SHAFT OF A MOTOR VEHICLE

(30) Priorité: 25.04.2014 FR 1453739
(43) Date de publication de la demande: 01.03.2017
(73) Titulaire: Poclain Hydraulics Industrie, 60410 Verberie (FR)
(72) Inventeur: GOUZOU, Christophe, Pierre, Jean, F-60410 Verberie (FR); LE LAY, François-Xavier, F-60410 Verberie (FR)
(74) Mandataire: Regimbeau
(86) Numéro de dépôt international: PCT/EP2015/058902
(87) Numéro de publication internationale: WO 2015/162252

(56) Documents cités:
- FR-A1- 2 621 280
- FR-A3- 2 902 706
- JP-A- S60 139 533
- US-A- 4 413 701
- US-A1- 2012 048 638

## Description

La présente invention concerne le domaine des ensembles d'entraînement pour un arbre moteur d'un véhicule automobile.

La présente invention concerne plus précisément les ensembles d'entraînement d'un premier arbre moteur, par exemple un train avant, comprenant une pompe hydrostatique accouplée à l'arbre moteur pour un prélèvement de puissance permettant d'assurer l'entraînement d'un second arbre, par exemple un train arrière.

L'invention s'applique notamment aux ensembles d'entraînement dans lesquels un moteur principal formé généralement d'un moteur thermique est orienté transversalement, c'est-à-dire avec son axe de sortie parallèle à l'arbre du train moteur et donc transversal à la direction longitudinale du véhicule.

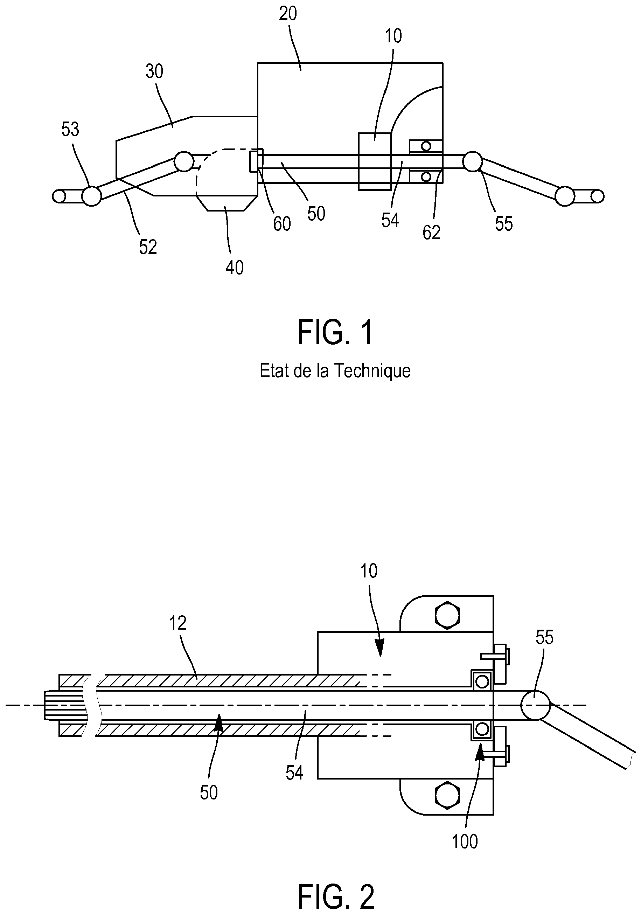

On a déjà proposé des ensembles du type illustré sur la figure 1 annexée comprenant en combinaison un moteur principal 20, tel qu'un moteur thermique, une boîte de vitesse 30, un différentiel 40, un arbre moteur 50 et une pompe hydrostatique 10.

Le moteur 20 entraîne la boîte de vitesse 30 qui elle-même entraîne le différentiel 40. L'arbre 50 est scindé en deux demi-arbres 52, 54 associés respectivement à des cardans 53, 55. Les demi-arbres 52, 54 sont couplés au différentiel 40. La pompe hydrostatique 10 est elle-même adaptée pour être accouplée à l'arbre de sortie de la boîte de vitesse 30 et est destinée à assurer une alimentation hydraulique d'un deuxième arbre ou deuxième train d'entraînement, à savoir par exemple le train arrière d'un véhicule automobile si l'arbre 50 constitue le train avant. On observera que selon l'état de la technique, l'un au moins des demi-arbres 54 est porté par deux paliers 60, 62 dont l'un 62 forme un palier intermédiaire.

Le palier intermédiaire 62 permet de porter correctement le demi-arbre 54 malgré sa grande longueur due au déport latéral du différentiel 40 du fait de la disposition transversale du moteur 20, c'est-à-dire avec son arbre de sortie parallèle à l'axe longitudinal de l'arbre 50.

Un exemple d'un tel ensemble connu selon le préambule de la revendication 1 est décrit dans le document FR-2621280.

La présente invention a maintenant pour objectif de perfectionner l'état de la technique ainsi formé.

Ce but est atteint selon la présente invention grâce à un ensemble d'entraînement pour un arbre moteur d'un véhicule automobile selon la revendication 1. L'ensemble d'entraînement comprend un moteur, tel qu'un moteur thermique, associé à une boîte de vitesse elle-même couplée à un différentiel et un arbre scindé en deux demi-arbres couplés au différentiel, l'ensemble d'entraînement comprenant en outre une machine hydraulique liée à la boîte de vitesse ou au différentiel pour être entraînée par cette liaison, la machine hydraulique formant un palier pour l'un des demi-arbres.

L'intégration sur la machine hydraulique d'un palier support d'arbre permet de limiter efficacement les vibrations et oscillations de l'arbre, notamment lorsque la boîte de vitesse est décalée d'un côté sur une extrémité du moteur, conduisant à deux demi-arbres de longueur différente, l'un long, l'autre court.

L'implantation de la machine hydraulique liée à la boîte de vitesse ou au différentiel pour être entraînée par cette liaison permet de récupérer de l'énergie, voire le cas échéant de restituer de l'énergie par l'intermédiaire de la machine hydraulique.

La présente invention concerne également les machines hydrauliques intégrant le palier précité, selon la revendication 19. D'autres caractéristiques, buts et avantages de la présente invention apparaîtront à la lecture de la description détaillée qui va suivre, faite en regard des dessins annexés, donnés à titre d'exemples non limitatifs et sur lesquels :
- la figure 1 précédemment décrite représente une vue schématique d'un ensemble d'entraînement conforme à l'état de la technique,
- la figure 2 représente une vue en coupe longitudinale d'un sous-ensemble de l'ensemble d'entraînement conforme à la présente invention, conforme à une première variante de réalisation,
- les figures 3 et 4 représentent schématiquement deux variantes de réalisation conformes à la présente invention et
- les figures 5, 6, 7 et 8 représentent quatre modes de réalisation particuliers conformes à la présente invention selon des plans de coupe passant par l'axe du palier formé sur la machine hydraulique, illustrant notamment le montage de roulements servant de palier et de joints d'étanchéité.

L'architecture générale de l'ensemble conforme à la présente invention reprend les dispositions précédemment décrites en regard de la figure 1. Cette architecture générale ne sera donc pas décrite dans le détail par la suite. On s'attachera dans la description qui suit à préciser les éléments qui différencient l'invention de l'état de la technique illustré sur la figure 1.

On rappelle néanmoins que comme indiqué précédemment, l'invention concerne un ensemble d'entraînement comprenant :
- un moteur principal, par exemple un moteur thermique,
- une boîte de vitesse entraînée par le moteur principal,
- un différentiel entrainé par la boîte de vitesse,
- un arbre scindé en deux demi-arbres, qui est couplé au différentiel,
- deux cardans couplés respectivement aux demi-arbres, et
- une machine hydraulique, destinée de préférence à l'entraînement d'un deuxième arbre, liée à la boîte de vitesse ou au différentiel.

Dans le cadre de la présente demande on utilise le terme « cardan » ou l'expression synonyme « joint de cardan » dans leur sens usuel dans le domaine automobile pour désigner un mécanisme permettant de transmettre un mouvement de rotation à des roues motrices et directrices, en assurant une liaison à rotation entre deux arbres, un arbre menant et un arbre mené, dont les axes sont concourants et ce en autorisant un déplacement angulaire de l'arbre mené dans toutes les directions relatives par rapport à l'arbre menant.

Par ailleurs dans le cadre de la présente invention on utilise l'expression « demi-arbre » pour désigner une portion d'arbre qui ne couvre pas toute la longueur d'un arbre moteur et ne s'étend pas intégralement entre deux roues motrices, mais seulement sur une partie d'un arbre moteur, entre un différentiel et un cardan associé et on utilise les expressions « arbre court » et « arbre long » pour désigner de telles portions d'arbre moteur ayant des longueurs différentes.

On a représenté sur la figure 2 annexée, un palier 100 conforme à la présente invention porté par la machine hydraulique 10, qui sert de palier pour le demi arbre 50 de transmission mécanique et ainsi sert de palier de cardan pour le cardan 55. La machine hydraulique 10 est entraînée par l'intermédiaire d'un arbre tubulaire 12 par la sortie de la boîte de vitesse 30 ou le différentiel 40.

Le demi-arbre 50 associé au cardan 55, ici un cardan droit, est logé à l'intérieur de l'arbre tubulaire 12, coaxialement à celui-ci.

Le palier 100 est intégré sur la machine hydraulique 10 qui porte ainsi à rotation le demi-arbre 50 à proximité du cardan 55.

Avantageusement, l'arbre tubulaire externe 12 est relié à la couronne ou cage du différentiel 40 tandis que l'arbre interne 50 est relié à un satellite du différentiel.

A titre d'exemple non limitatif, le palier 100 peut être formé d'un roulement à billes.

La machine hydraulique 10 est de préférence une machine à pistons radiaux.

De telles machines sont par exemple décrites dans les documents FR-2872227 et FR 2940672.

La structure générale d'une telle machine à pistons radiaux est bien connue de l'homme de l'art et ne sera donc pas décrite dans le détail par la suite. On rappelle cependant que généralement les moteurs hydrauliques à pistons radiaux comprennent, dans la chambre d'un carter, un transducteur hydraulique/mécanique composé d'une came multilobes, d'un bloc cylindres monté à rotation relative dans le carter, d'un arbre lié à rotation au bloc cylindres, de pistons guidés à coulissement radial dans des cylindres respectifs du bloc cylindres et prenant appui sur les lobes de la came, et d'un distributeur adapté pour appliquer successivement et de manière contrôlée sur les pistons un fluide provenant d'une source sous pression, de sorte que, le nombre de pistons étant différents du nombre de lobes formés sur la came, l'appui successif des pistons sur les lobes de la came entraîne la rotation relative du bloc cylindres et des éléments qui lui sont liés par rapport au carter.

Un tel système est réversible. C'est-à-dire que si l'arbre ou un élément qui lui est lié mécaniquement est entrainé en rotation par un organe mécanique externe, la coopération des pistons et de la came multilobes génère des pressions successives dans les cylindres, de sorte que le transducteur hydraulique/mécanique constitue alors non pas un moteur mais une pompe hydraulique.

Un exemple de réalisation d'une telle machine hydraulique comprenant une came multilobes externe associée à un bloc cylindre et des pistons radiaux internes, est décrit dans le document FR 2872227.

Un exemple de réalisation d'une telle machine hydraulique comprenant une came multilobes interne associée à un bloc cylindre et des pistons radiaux externes, est décrit dans le document FR 2940672.

On notera que du côté de la machine hydraulique 10, un arbre long 50 associé à un cardan 55 relie une roue à la boite de vitesse 30 en passant à travers la machine hydraulique 10.

Par ailleurs les deux cardans gauche 53 et droit 55 ont sensiblement la même longueur et sont avantageusement identiques ou au moins sensiblement identiques.

On notera également que de préférence la machine 10 qui fait palier intermédiaire de transmission est disposée de manière à ce que les emmanchements des cardans gauche 53 et droit 55 soient situés à la même distance de l'axe longitudinal du véhicule, de manière à ce que les deux cardans 53 et 55 soient identiques ou au moins sensiblement identiques.

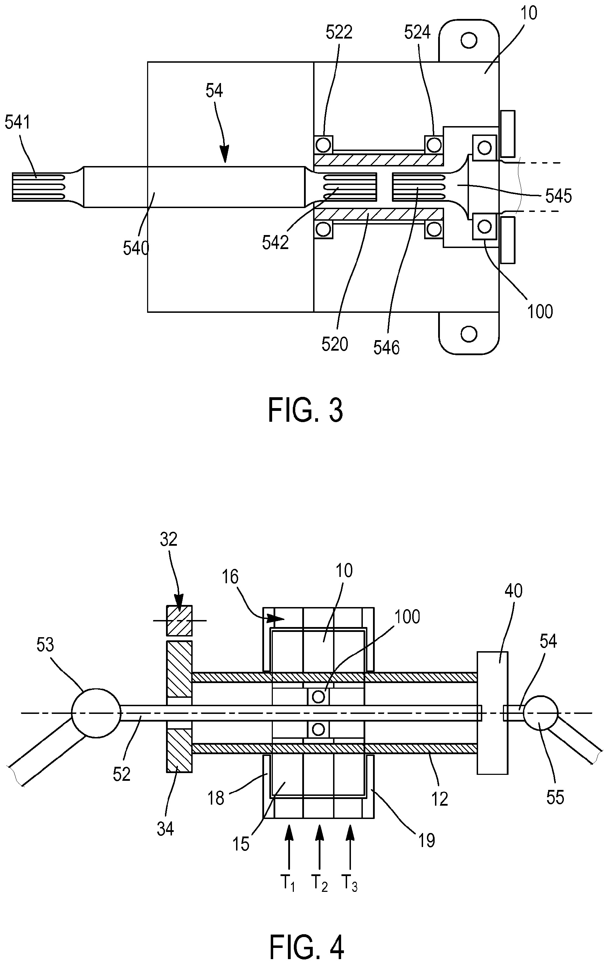

On a représenté sur la figure 3 annexée, une variante de réalisation conforme à la présente invention.

Sur la figure 3, l'arbre 12 externe assurant l'entrainement de la machine hydraulique 10 n'est pas représenté pour simplifier l'illustration.

Le demi-arbre 54 est ici formé de deux tronçons coaxiaux 540, 545, l'un 540 couplé par tous moyens appropriés, par exemple par un embout cannelé 541 avec un satellite du différentiel 40 et l'autre 545 couplé au cardan 55. Les deux tronçons 540, 545 sont couplés mécaniquement par un manchon cannelé 520 externe lui-même guidé à rotation sur la machine hydraulique 10 par deux paliers 522, 524.

Le manchon cannelé 520 est en prise avec deux embouts cannelés 542 et 546 formés respectivement sur les extrémités respectives adjacentes des deux tronçons 540 et 545.

Là encore, comme illustré sur la figure 3, le tronçon 545 associé au cardan 55 est porté à rotation par un palier 100 intégré sur le carter de la machine hydraulique 10.

Selon les modes de réalisation illustrés sur les figures 2 et 3, le différentiel 40 peut être intégré dans la boite de vitesse 30.

On a représenté sur la figure 4 annexée, une variante de réalisation conforme à l'invention selon laquelle le différentiel 40 est déporté sur la droite. Selon cette variante, la machine hydraulique 10 comportant le palier 100 porte le demi-arbre 52 associé au cardan gauche 53.

On aperçoit sur cette figure 4, un pignon 32 d'arbre secondaire de la boite de vitesse 30 et le pignon 34 de sortie de la boite de vitesse, relié à la grande couronne du différentiel 40 par l'intermédiaire d'un arbre tubulaire 12.

Cet arbre tubulaire externe 12 sert de prise de force pour transférer du couple entre la machine hydraulique 10 et le différentiel 40.

On a représenté schématiquement sur la figure 4, un bloc cylindres 15 et une came multilobes 16 formant une machine hydraulique 10 à pistons radiaux, du type précité.

Plus précisément encore sur la figure 4 on a esquissé une machine hydraulique 10 formée par empilement coaxial de plusieurs tranches, en l'espèce 3 tranches T1, T2 et T3, comportant chacune un bloc cylindres 15 et une came multilobes associée 16, disposées entre deux couvercles d'extrémité 18 et 19.

De préférence les différentes tranches sont décalées angulairement afin de lisser le fonctionnement homocinétique de la machine.

La réalisation de la machine 10 sous forme modulaire par empilement de plusieurs tranches permet d'augmenter la cylindrée de la machine.

Le palier 100 est représenté schématiquement sur la figure 4 annexée. En pratique il est de préférence porté par l'un des couvercles 18, 19 ou plus généralement un élément du carter de la machine 10.

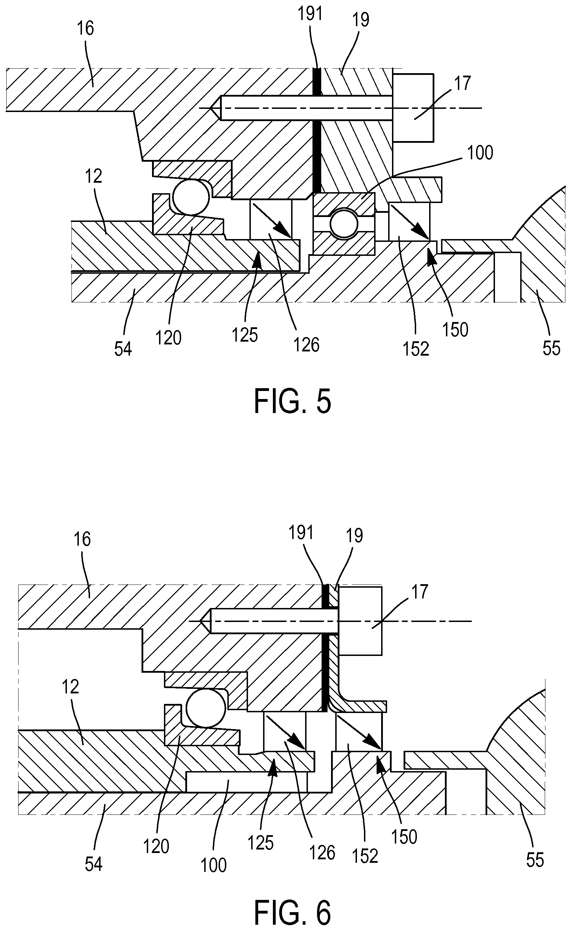

On aperçoit sur chacune des figures 5, 6, 7 et 8 qui illustrent quatre modes de réalisation conformes à la présente invention :
- un élément 16 de carter de la machine hydraulique,
- un arbre intermédiaire 12 formé d'un arbre tubulaire creux, qui assure la liaison à rotation entre la machine hydraulique 10 et une boite de vitesse 30 ou un différentiel 40, les moyens d'entrainement entre l'arbre tubulaire creux 12 et la partie tournante de la machine hyraulique 10 ne sont pas représentés. Il peuvent être réalisés au moyen de cannelures ou de doigts d'entrainement, ou de système complexes type joint de Oldham
- un demi-arbre 54 qui traverse l'arbre intermédiaire tubulaire 12 et qui est entraîné par le différentiel 40 et est relié à un cardan 55 et
- un roulement 100 qui sert de palier pour le demi-arbre 54.

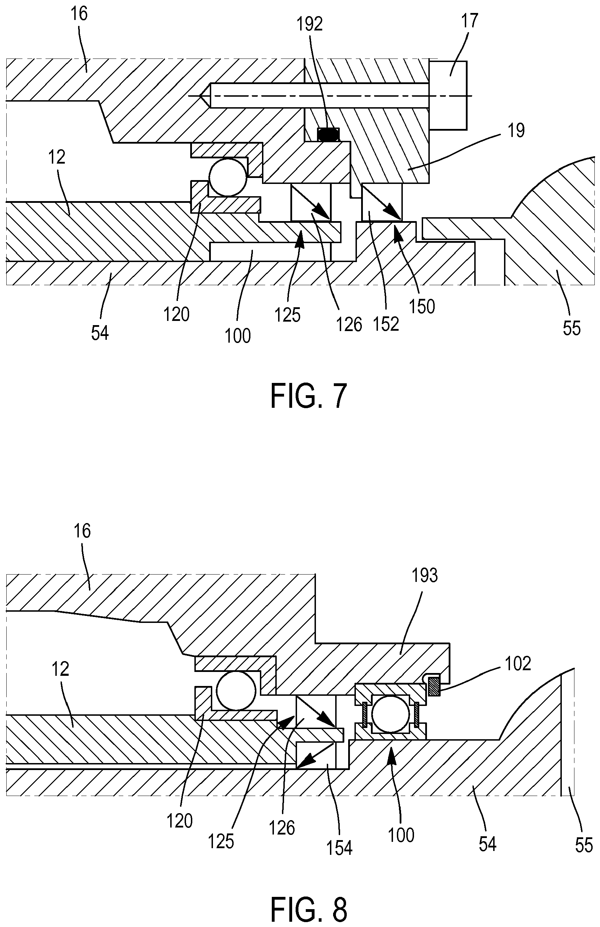

Selon les modes de réalisation illustrés sur les figures 5, 6 et 7, la machine hydraulique 10 comprend un couvercle 19 fixé sur l'élément 16 de carter par des moyens filetés 17 ou tous moyens équivalents. Un joint d'étanchéité 191, a titre d'exemple un joint plat, ou un joint torique dans une gorge, ou une pâte d'étanchéité, ou tout autre moyen de joint habituel entre deux plans de joint, est intercalé entre le couvercle 19 et une face d'extrémité de l'élément 16, transversalement à l'axe de rotation O-O selon les figures 5 et 6. Selon le mode de réalisation illustré sur la figure 7, l'étanchéité entre le couvercle 19 et l'élément 16 est réalisée par un joint torique équivalent 192 monté en étanchéité radiale.

Le mode de réalisation représenté sur la figure 8 ne comprend pas de couvercle 19 rapporté sur l'élément 16. Mais selon la figure 8, l'élément 16 de carter comporte une partie 193 venue de matière équivalent.

L'arbre intermédiaire tubulaire 12 est supporté à rotation par un roulement 120, formé de préférence d'un roulement à billes, intercalé entre la surface externe de l'arbre 12 et l'élément 16, selon les quatre modes de réalisation des figures 5 à 8.

Selon les deux modes de réalisation illustrés sur les figures 5 et 8, le roulement 100 qui forme palier pour le demi-arbre 54, est intercalé entre la surface externe du demi-arbre 54 et un élément de carter de la machine hydraulique 10, plus précisément le couvercle 19 selon la figure 5 et la partie équivalente 193 venue de matière selon la figure 8. Dans ce cas le roulement 100 est de préférence un roulement à billes. Par ailleurs selon la figure 8 le roulement 100 est de préférence un roulement étanche.

Selon les deux modes de réalisation illustrés sur les figures 6 et 7, en revanche, le roulement qui forme palier pour le demi-arbre 54 est intercalé entre la surface externe du demi-arbre 54 et la surface interne de l'arbre intermédiaire tubulaire 12 lui-même porté par le roulement 120. Dans ce cas le roulement 100 est de préférence un roulement à aiguilles.

Les quatres modes de réalisation illustrés sur les figures 5 à 8 comprennent en outre des moyens d'étanchéité associés respectivement au demi-arbre 54 et à l'arbre intermédiaire 12.

Selon les modes de réalisation illustrés sur les figures 5, 6 et 7, les moyens d'étanchéité 150 associés au demi-arbre 54 sont formés d'un joint à lèvre 152 intercalé entre l'arbre 54 et le couvercle 19. Selon le mode de réalisation illustré sur la figure 8, les moyens d'étanchéité 150 sont formés d'un joint à lèvre 154 intercalé entre l'arbre 54 et l'arbre tubulaire 12.

Selon les modes de réalisation illustrés sur les 4 figures 5 à 8, les moyens d'étanchéité 125 associés à l'arbre intermédiaire 12 sont formés d'un joint à lèvre 126 intercalé entre l'arbre intermédiaire 12 et l'élément 16 de carter de la machine hydraulique 10.

On notera que selon la figure 8, le roulement 100 qui forme le palier du demi-arbre 54 est maintenu axialement sur la machine hydraulique 10 par un clip annulaire de maintien 102 engagé dans une gorge complémentaire de la partie 193 du carter de machine hydraulique 10.

Différentes configurations peuvent être retenues pour assurer la liaison entre le demi-arbre 54 et le cardan associé 55, comme on le voit à l'examen comparé des figures 4 à 8.

L'homme de l'art comprendra à l'examen des figures 5 à 8 que selon les quatre modes de réalisation illustrés, non seulement le roulement 100 porté directement ou indirectement par le carter de la machine hydraulique 10 assure le palier de rotation du demi-arbre 54, mais en outre il est prévu des moyens d'étanchéité 125 entre l'arbre intermédiaire 12 et le carter de la machine hydraulique et des moyens d'étanchéité 150 associés au demi-arbre 54, entre le demi-arbre 54 et le carter de la machine hydraulique 10.

Bien entendu la présente invention n'est pas limitée aux modes de réalisation qui viennent d'être décrits, mais s'étend à toutes variantes conformes à son esprit.

La présente invention offre notamment une solution pour placer une machine à came multilobes à proximité d'une sortie de boite de vitesse et permet ainsi un gain de place par rapport à des solutions disponibles conformes à l'état de la technique.

## Revendications

1. Ensemble d'entraînement pour un arbre moteur d'un véhicule automobile comprenant un moteur (20), une boîte de vitesse (30), un arbre (50) scindé en deux demi-arbres couplés à un différentiel (40), l'ensemble comprenant en outre une machine hydraulique (10) qui est liée à la boîte de vitesse (30) ou au différentiel (40) pour être entraînée par cette liaison, **caractérisé en ce que** la machine hydraulique (10) forme un palier (100) pour l'un des demi-arbres (54).

2. Ensemble selon la revendication 1, **caractérisé en ce que** le moteur (20) est transversal par rapport à la direction longitudinale du véhicule.

3. Ensemble selon l'une des revendications 1 ou 2, **caractérisé en ce qu'**il comprend deux arbres (12, 50) concentriques allant de la boite de vitesse (30) au palier (100).

4. Ensemble selon la revendication 3, **caractérisé en ce que** un arbre externe (12) est couplé à la couronne du différentiel (40) et est relié à la machine hydraulique (10) et un arbre interne (54) traversant est couplé à un satellite du différentiel (40).

5. Ensemble selon l'une des revendications 1 à 4, **caractérisé en ce que** la machine (10) est une machine à came multilobes (16) et à pistons radiaux.

6. Ensemble selon l'une des revendications 1 à 5, **caractérisé en ce que** la machine (10) est formée par empilement de plusieurs tranches (T1, T2, T3) coaxiales comprenant chacune une came multilobes (16) et des pistons radiaux.

7. Ensemble selon l'une des revendications 1 à 6, **caractérisé en ce que** le différentiel (40) est intégré dans la boite de vitesse (30).

8. Ensemble selon l'une des revendications 1 à 6, **caractérisé en ce que** le différentiel (40) est situé du côté de la machine hydraulique (10).

9. Ensemble selon l'une des revendications 1 à 8, **caractérisé en ce que** du côté de la machine hydraulique (10), un arbre long (54) associé à un cardan (55) relie une roue à la boite de vitesse (30) en passant à travers la machine hydraulique (10).

10. Ensemble selon l'une des revendications 1 à 9, **caractérisé en ce que** les deux cardans (53, 55) droite et gauche, ont sensiblement la même longueur.

11. Ensemble selon l'une des revendications 1 à 10, **caractérisé en ce que** la machine (10) qui fait palier intermédiaire de transmission est disposée de manière à ce que les emmanchements des cardans gauche (53) et droit (55) soient situés à la même distance de l'axe longitudinal du véhicule, et que les deux cardans (53, 55) soient au moins sensiblement identiques.

12. Ensemble selon l'une des revendications 1 à 11, **caractérisé en ce que** la machine hydraulique (10) alimente des moteurs associés à un second arbre.

13. Ensemble selon l'une des revendications 1 à 12, **caractérisé en ce que** le palier (100) d'un demi-arbre (54), intégré à la machine hydraulique (10), est porté par un élément de carter de la machine hydraulique (10), par exemple un couvercle (19).

14. Ensemble selon la revendication 13, **caractérisé en ce que** le roulement formant palier (100) d'un demi-arbre (54), intégré à la machine hydraulique (10), est un roulement à bille.

15. Ensemble selon l'une des revendications 1 à 12, **caractérisé en ce que** le palier (100) d'un demi-arbre (54), intégré à la machine hydraulique (10), est porté par un arbre tubulaire (12) lui-même supporté par un élément (16) de carter de la machine hydraulique (10), par un roulement associé (120).

16. Ensemble selon la revendication 15, **caractérisé en ce que** le roulement formant palier (100) d'un demi-arbre (54), intégré à la machine hydraulique (10) et porté par un arbre tubulaire (12) lui-même supporté par un élément (16) de carter de la machine hydraulique (10), est un roulement à aiguille.

17. Ensemble selon l'une des revendications 1 à 16, **caractérisé en ce que** des moyens d'étanchéité (150) associés au demi-arbre (54), et formés de préférence d'un joint à lèvre, sont intercalés entre le demi-arbre (54) et le carter de la machine hydraulique (10) ou un élément associé tel qu'un arbre tubulaire (12) guidé à rotation par cet élément.

18. Ensemble selon l'une des revendications 1 à 16, **caractérisé en ce que** des moyens d'étanchéité (125) formés de préférence d'un joint à lèvre, sont intercalés entre un arbre intermédiaire tubulaire (12) entrainé par la boite de vitesse ou le différentiel, et le carter de la machine hydraulique.

19. Machine hydraulique destinée à la mise en oeuvre d'un ensemble conforme à l'une des revendications 1 à 18, **caractérisée en ce qu'**elle porte un palier intermédiaire (100) pour le support d'un arbre de transmission mécanique couplé à un différentiel.

20. Machine selon la revendication 19, **caractérisée en ce qu'**elle est traversée par le demi-arbre (54) guidé par le palier (100).

## Patentansprüche

1. Antriebseinheit für eine Motorwelle eines Kraftfahrzeugs, umfassend einen Motor (20), ein Schaltgetriebe (30), eine Welle (50), die in zwei Wellenhälften geteilt ist, die an ein Differenzial (40) gekoppelt sind, wobei die Einheit weiterhin eine hydraulische Maschine (10) umfasst, die mit dem Schaltgetriebe (30) oder dem Differenzial (40) verbunden ist, um durch diese Verbindung angetrieben zu werden, **dadurch gekennzeichnet, dass** die hydraulische Maschine (10) ein Lager (100) für eine der Wellenhälften (54) bildet.

2. Einheit nach Anspruch 1, **dadurch gekennzeichnet, dass** der Motor (20) in Bezug auf die Längsrichtung des Fahrzeugs quer verlaufend ist.

3. Einheit nach einem der Ansprüche 1 oder 2, **dadurch gekennzeichnet, dass** sie zwei konzentrische Wellen (12, 50) umfasst, die von dem Schaltgetriebe (30) zu dem Lager (100) verlaufen.

4. Einheit nach Anspruch 3, **dadurch gekennzeichnet, dass** eine äußere Welle (12) an den Kranz des Differenzials (40) gekoppelt und mit der hydraulischen Maschine (10) verbunden ist und eine durchsetzende, innere Welle (54) an ein Umlaufrad des Differenzials (40) gekoppelt ist.

5. Einheit nach einem der Ansprüche 1 bis 4, **dadurch gekennzeichnet, dass** die Maschine (10) eine Maschine mit mehrbogigem Nocken (16) und mit Radialkolben ist.

6. Einheit nach einem der Ansprüche 1 bis 5, **dadurch gekennzeichnet, dass** die Maschine (10) von einem Stapel aus mehreren koaxialen Abschnitten (T1, T2, T3) gebildet wird, die jeweils einen mehrbogigen Nocken (16) und Radialkolben umfassen.

7. Einheit nach einem der Ansprüche 1 bis 6, **dadurch gekennzeichnet, dass** das Differenzial (40) in das Schaltgetriebe (30) integriert ist.

8. Einheit nach einem der Ansprüche 1 bis 6, **dadurch gekennzeichnet, dass** sich das Differenzial (40) auf Seite der hydraulischen Maschine (10) befindet.

9. Einheit nach einem der Ansprüche 1 bis 8, **dadurch gekennzeichnet, dass** auf Seite der hydraulischen Maschine (10) eine lange Welle (54), die zu einem Kardan (55) gehört, ein Rad mit dem Schaltgetriebe (30) verbindet, indem sie durch die hydraulische Maschine (10) durchläuft.

10. Einheit nach einem der Ansprüche 1 bis 9, **dadurch gekennzeichnet, dass** die zwei Kardane (53, 55) rechts und links im Wesentlichen die gleiche Länge haben.

11. Einheit nach einem der Ansprüche 1 bis 10, **dadurch gekennzeichnet, dass** die Maschine (10), die als Getriebezwischenlager dient, so angeordnet ist, dass sich die Einsteckenden des linken (53) und rechten (55) Kardans im gleichen Abstand von der Längsachse des Fahrzeugs befinden, und dass die zwei Kardane (53, 55) mindestens im Wesentlichen identisch sind.

12. Einheit nach einem der Ansprüche 1 bis 11, **dadurch gekennzeichnet, dass** die hydraulische Maschine (10) Motoren versorgt, die zu einer zweiten Welle gehören.

13. Einheit nach einem der Ansprüche 1 bis 12, **dadurch gekennzeichnet, dass** das Lager (100) einer Wellenhälfte (54), das in die hydraulische Maschine (10) integriert ist, von einem Gehäuseelement der hydraulischen Maschine (10) getragen wird, zum Beispiel einem Deckel (19).

14. Einheit nach Anspruch 13, **dadurch gekennzeichnet, dass** das Lager, welches das Lager (100) einer Wellenhälfte (54) bildet, das in die hydraulische Maschine (10) integriert ist, ein Kugellager ist.

15. Einheit nach einem der Ansprüche 1 bis 12, **dadurch gekennzeichnet, dass** das Lager (100) einer Wellenhälfte (54), das in die hydraulische Maschine (10) integriert ist, von einer rohrförmigen Welle (12) getragen wird, die ihrerseits von einem Gehäuseelement (16) der hydraulischen Maschine (10) durch ein zugehöriges Lager (120) gestützt wird.

16. Einheit nach Anspruch 15, **dadurch gekennzeichnet, dass** das Lager, welches das Lager (100) einer Wellenhälfte (54) bildet, das in die hydraulische Maschine (10) integriert ist und von einer rohrförmigen Welle (12) getragen wird, die ihrerseits von einem Gehäuseelement (16) der hydraulischen Maschine (10) gestützt wird, ein Nadellager ist.

17. Einheit nach einem der Ansprüche 1 bis 16, **dadurch gekennzeichnet, dass** Dichtungsmittel (150), die zu der Wellenhälfte (54) gehören und vorzugweise von einer Lippendichtung gebildet werden, zwischen der Wellenhälfte (54) und dem Gehäuse der hydraulischen Maschine (10) oder einem zugehörigen Element wie etwa einer rohrförmigen Welle (12), das von diesem Element in Drehung versetzt wird, eingefügt sind.

18. Einheit nach einem der Ansprüche 1 bis 16, **dadurch gekennzeichnet, dass** Dichtungsmittel (125), die vorzugweise von einer Lippendichtung gebildet werden, zwischen einer rohrförmigen Zwischenwelle (12), die von dem Schaltgetriebe oder dem Differenzial angetrieben wird, und dem Gehäuse der hydraulischen Maschine eingefügt sind.

19. Hydraulische Maschine, die zur Umsetzung einer Einheit nach einem der Ansprüche 1 bis 18 bestimmt ist, **dadurch gekennzeichnet, dass** sie ein Zwischenlager (100) zum Stützen einer mechanischen Antriebswelle, die an ein Differenzial gekoppelt ist, trägt.

20. Maschine nach Anspruch 19, **dadurch gekennzeichnet, dass** sie von der Wellenhälfte (54) durchsetzt wird, die durch das Lager (100) geführt wird.

## Claims

1. Drive assembly for a motor vehicle drive shaft comprising an engine (20), a gearbox (30), a shaft (50) divided into two half-shafts coupled to a differential (40), with the assembly further comprising a hydraulic machine (10) which is linked to the gearbox (30) or to the differential (40) in order to be driven by this link, **characterised in that** the hydraulic machine (10) forms a bearing (100) for one of the half-shafts (54).

2. Assembly according to claim 1, **characterised in that** the engine (20) is transversal with respect to the longitudinal direction of the vehicle.

3. Assembly according to one of claims 1 or 2, **characterised in that** it comprises two concentric shafts (12, 50) going from the gearbox (30) to the bearing (100).

4. Assembly according to claim 3, **characterised in that** an external shaft (12) is coupled to the crown of the differential (40) and is connected to the hydraulic machine (10) and a through-external shaft (54) is coupled to a satellite of the differential (40).

5. Assembly according to one of claims 1 to 4, **characterised in that** the machine (10) is a multi-lobe cam machine (16) and with radial pistons.

6. Assembly according to one of claims 1 to 5, **characterised in that** the machine (10) is formed by the stacking of several coaxial tranches (T1, T2, T3) with each one comprising a multi-lobe cam (16) and radial pistons.

7. Assembly according to one of claims 1 to 6, **characterised in that** the differential (40) is integrated into the gearbox (30).

8. Assembly according to one of claims 1 to 6, **characterised in that** the differential (40) is located on the side of the hydraulic machine (10).

9. Assembly according to one of claims 1 to 8, **characterised in that** on the side of the hydraulic machine (10), a long shaft (54) associated with a cardan (55) connects a wheel to the gearbox (30) by passing through the hydraulic machine (10).

10. Assembly according to one of claims 1 to 9, **characterised in that** the two right and left cardans (53, 55), have substantially the same length.

11. Assembly according to one of claims 1 to 10, **characterised in that** the machine (10) which acts as an intermediate transmission bearing is arranged in such a way that press-fittings of the left (53) and right (55) cardans are located at the same distance from the longitudinal axis of the vehicle, and that the two cardans (53, 55) are at least substantially identical.

12. Assembly according to one of claims 1 to 11, **characterised in that** the hydraulic machine (10) supplies engines associated with a second shaft.

13. Assembly according to one of claims 1 to 12, **characterised in that** the bearing (100) of a half-shaft (54), integrated into the hydraulic machine (10), is carried by a carter element of the hydraulic machine (10), for example a cover (19).

14. Assembly according to claim 13, **characterised in that** the roller bearing forming a bearing (100) of a half-shaft (54), integrated into the hydraulic machine (10), is a ball bearing.

15. Assembly according to one of claims 1 to 12, **characterised in that** the bearing (100) of a half-shaft (54), integrated into the hydraulic machine (10), is carried by a tubular shaft (12) which itself is supported by a carter element (16) of the hydraulic machine (10), by an associated bearing (120).

16. Assembly according to claim 15, **characterised in that** the roller bearing forming a bearing (100) of a half-shaft (54), integrated into the hydraulic machine (10) and carried by a tubular shaft (12) which itself is supported by a carter element (16) of the hydraulic machine (10), is a needle bearing.

17. Assembly according to one of claims 1 to 16, **characterised in that** means of sealing (150) associated with the half-shaft (54), and formed more preferably from a lip seal, are inserted between the half-shaft (54) and the carter of the hydraulic machine (10) or an associated element such as a tubular shaft (12) guided in rotation by this element.

18. Assembly according to one of claims 1 to 16, **characterised in that** means of sealing (125) formed more preferably from a lip seal, are inserted between a tubular intermediate shaft (12) driven by the gearbox or the differential, and the carter of the hydraulic machine.

19. Hydraulic machine intended for the implementation of an assembly in accordance with one of claims 1 to 18, **characterised in that** it carries an intermediate bearing (100) for the support of a mechanical transmission shaft coupled to a differential.

20. Machine according to claim 19, **characterised in that** it is passed through by the half-shaft (54) guided by the bearing (100).
